Europäisches Patentamt

European Patent Office

Office européen des brevets

(11) Publication number: **0 536 396 A1**

# EUROPEAN PATENT APPLICATION
## published in accordance with Art. 158(3) EPC

(21) Application number: 91908185.1

(22) Date of filing: **26.04.91**

(86) International application number:
**PCT/JP91/00576**

(87) International publication number:
**WO 91/17501 (14.11.91 91/26)**

(51) Int. Cl.5: **G06F 9/44**, G06F 15/18

(30) Priority: **27.04.90 JP 113462/90**

(43) Date of publication of application:
**14.04.93 Bulletin 93/15**

(84) Designated Contracting States:
**DE FR GB IT**

(71) Applicant: **KABUSHIKI KAISHA KOMATSU SEISAKUSHO**
**3-6, Akasaka 2-chome**
**Minato-ku Tokyo 107(JP)**

(72) Inventor: **YAMAGUCHI, Hiroyoshi, KK. Komatsu Seisakusho**
**Research Institution, 1200, Manda Hiratsuka-shi, Kanawaga 254(JP)**
Inventor: **MIMURA, Tatsuo, KK. Komatsu Seisakusho**
**Research Institution, 1200, Manda Hiratsuka-shi, kanawaga 254(JP)**

(74) Representative: **Selting, Günther, Dipl.-Ing. et al**
**Deichmannhaus am Hauptbahnhof**
**W-5000 Köln 1 (DE)**

(54) **METHOD OF ADJUSTING AUTOMATICALLY RULE BASE OF EXPERT SYSTEM USING NEURAL NETWORK AND DEVICE THEREOF.**

(57) The rule base of an expert system which comprises a set of production rules including condition parts, action parts and certainties is resolved hierarchically into units of propositions each of which includes no or one logical operator. Then, every proposition, a characteristic list including the relations with propositions of upper hierarchies and certainty is generated automatically. Further, an initial pattern of a neural network in which the connective relations between propositions correspond to the ones between neurons is created automatically according to the generated characteristic list. Thereafter, learning of the created neural network is performed. Thereby, even one who has no expert knowledge can perform effectively the maintenance of the rule base of the expert system.

EP 0 536 396 A1

# FIG.1

## TECHNICAL FIELD:

The present invention relates to a method of adjusting automatically a rule base of an expert system using a neural network and a device thereof.

## BACKGROUND ART:

An expert system comprises a rule base corresponding to an assembly of knowledge obtained by experts in various fields and expressed in rule representations and an inference engine for performing its inferring operation with use of the knowledge stored in the rule base. In generating such an expert system, it is inevitable to revise the rule base and the rule base must be adjusted through repetitive tests until an expected result is obtained.

The adjusting works of the rule base have been conventionally carried out using an explanation capability of explaining the reasoning or procedure of inference from problem input to the expert system to answer output therefrom. That is, the expert system clarifies inferring steps resulting in a wrong answer or facts in the rule base resulting in wrong steps and then the expert conducts such revising works as addition or modification of the rule and the adjustment of a certainty.

However, the aforementioned explanation capability so far used can clarify merely the reasoning of inference, so that the revising works can be actually conducted only by such experts who can sufficiently understand the expert system and the revising works are very difficult even to such experts. In particular, the fine adjustment of the certainty, which influences are mostly still unknown, is almost impossible even to the experts. In addition, when it is desired to use the explanation capability, since the inferring operation and the calculation of the certainty must be carried out each time an initial state is given, it takes a lot of time to attain the revising works.

In view of the above circumstances, it is an object of the present invention to provide a method for automatically adjusting a rule base in an expert system using a neural network, which enables persons other than experts to easily and efficiently conduct the revising works of the rule base of the expert system.

## DISCLOSURE OF INVENTION:

In accordance with the present invention, revising of a rule base of an expert system can be realized through learning operation of a neural network. The neural network comprises neurons connected by links in a hierarchical form, the links between the neurons having weight values set therefor. Each of the neurons multiplies input signals received from its higher neurons by their weight values, sets a sum of such multiplied values as an input value, determines its own output value in accordance with a predetermined input/output function, and outputs the output values to its lower neuron. The neural network is intended to be arranged so that, when a signal is provided to an input layer of the network, a desired output is obtained. For the purpose of obtaining a desired relationship between the input and output, the weight value is varied, which is known as learning.

In accordance with an aspect of the present invention, propositions in a rule base of an expert system are associated with respective neurons and certainties of knowledge in production rules of the rule base are used as weights at the input sides of the neurons.

More specifically, the present invention comprises: a first step of hierarchically resolving the rule base of the expert system which comprises a set of production rules each including a condition part, action part and a certainty into units of propositions each including no or one logical operator to automatically generate a characteristic list including a relationship with a proposition in a higher layer and the certainty with respect to each of the resolved propositions; a second step of automatically generating an initial pattern of a neural network having neurons whose linkage relationships are associated with linkage relationships of the propositions on the basis of the generated characteristic list; and a third step of performing learning operation of the generated neural network.

The present invention has advantageous effects (1) to (3) which follow.

(1) Since the learning of the neural network is employed, even a person having no specialized knowledge can maintain the rule base of the expert system (addition and/or modification of a rule, and adjustment of a certainty).

(2) Since the learning of the neural network is employed, a maintenance time can be remarkably reduced when compared to a case based on the conventional explanation capability.

(3) Since the initial pattern of learning of the neural network is determined by the rule base of the expert system, the need for starting the learning from a given state like an ordinary neural network can be

EP 0 536 396 A1

eliminated. As a result, a learning time is shortened and thus the maintenance time of the neural network can be reduced.

BRIEF DESCRIPTION OF THE DRAWINGS:

Fig. 1 is a block diagram of an embodiment of the present invention;
Figs. 2 and 3 are flowcharts for explaining the operation of the embodiment of the invention;
Fig. 4 shows an neuron-link arrangement developed in a neural network;
Fig. 5 is a flowchart for explaining the operation of the embodiment of the invention; and
Fig. 6 shows diagrams for explaining inverse converting operation.

BEST MODE FOR CARRYING OUT THE INVENTION:

An embodiment of the present invention will be detailed with reference to the accompanying drawings.

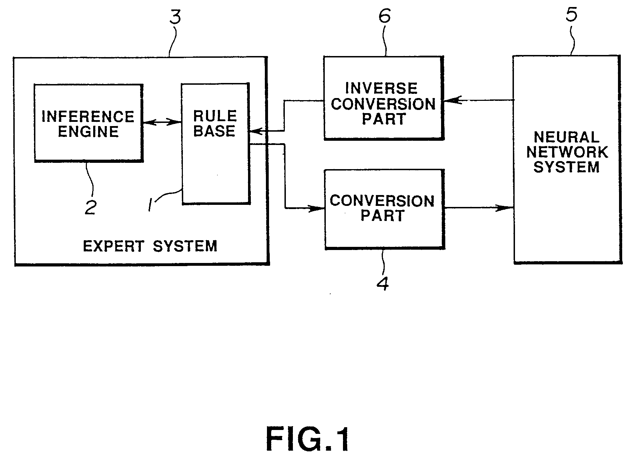

Referring to Fig. 1, there is conceptionally shown an embodiment of the present invention, which includes an expert system 3 having a rule base 1 and an inference engine 2; a conversion part 4 for automatically converting the rule base 1 of the expert system 3 into a data structure processible in a neural network system 5; the neural network system 5 for automatically generating and learning a neural network comprising neuron network links to revise the rule base 1 on the basis of data (characteristic list to be explained later) received through the conversion part 4; and an inverse conversion part 6 for automatically inversely converting the neural network subjected to the learning of the neural network system 5 into a format corresponding to the rule base 1 of the expert system 3.

More specifically, the rule base 1 is an assembly of a plurality of production rules (which will be referred to merely as rules, hereinafter) and these rules are each expressed as follows, as well known.

IF (An: Condition part)
THEN (Bn: Action part)
CF (Cn: Certainty of rule) (n = 1, 2, 3,...)

When these condition and action parts An and Bn are handled respectively as an element and consideration is paid only to its true or false, these part sentences are called "propostions" which may contain, in some cases, such a logical operator as AND, OR or NOT.

Here is an example of a rule base.

[Rule Base A]

Ж Rule 1: IF A1 THEN B1 CF C1
Ж Rule 2: IF (AND A2 A3) THEN B2 CF C2

The neural network system 5 is a fifth generation computer which comprises neurons linked in a network form and which uses a software simulator at the current stage. And its neural network has a multi-layered structure including an input layer, an intermediate layer and an output layer.

Detailed explanation will first be made as to the operation of the conversion part 4. The conversion part 4 has processing steps which follow.

I. Rule Conversion Step
II. Rule Priority Decision Step
III. Proposition Priority Decision Step
IV. Dummy Proposition Development Step
V. Proposition Characteristic List Decision Step

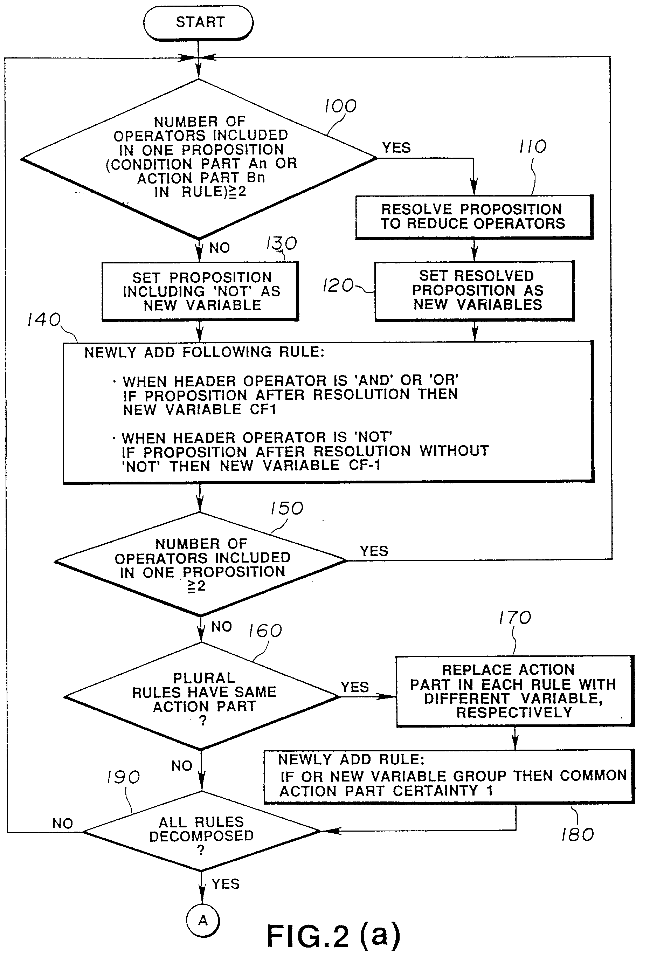

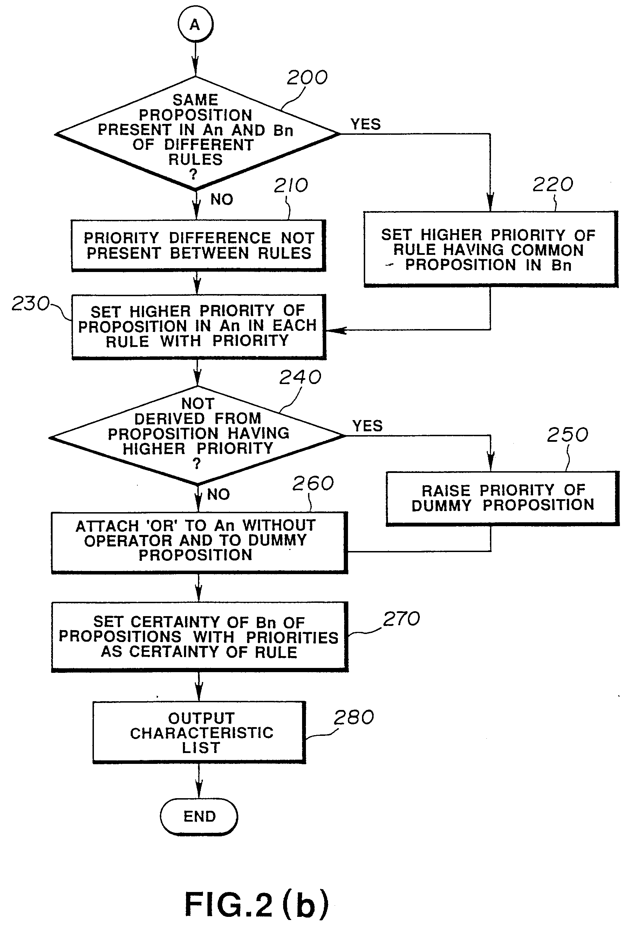

These steps will be sequentially detailed by referring to flowcharts of Fig. 2.

I. Rule Conversion Step

This stem is further divided into 5 procedures:

Procedure 1

Extracts from a plurality of rules in the rule base ones of the rules which contain a plurality of operators, and resolves each of the condition and action parts An and Bn of the extracted rules into propositions each containing at most one operator (steps 100 to 110 in Fig. 2).

4

### Procedure 2

Replaces ones of the resolved propositions containing the operator with a new variable Rn (step 120).

### Procedure 3

Newly adds a rule "if that proposition, then the new variable certainty = 1". The 'that proposition' in the new rule refers to ones of the resolved propositions containing the operator (step 140).

### Procedure 4

Extracts ones of the plurality of rules which contain an operator NOT, replaces the propositions of the extracted rules with the variable Rn, and further newly adds the following rule (steps 130 to 140).
"If the proposition contains no NOT, then the new variable certainty = -1"

### Procedure 5

Extracts ones of the rules having the same action part Bn, replaces the action parts of the extracted rules with the new variable Rn, and further newly adds the following rule (steps 160 to 180).
"If OR (a new variable group), then the same action part certainty = 1"
The above procedures are repetitively executed until all the rules are resolved (step 190).
When such rule conversion processing is carried out with respect to the following rule base B, its conversion result is obtained as a rule base B-NEW (which is also given further below the rule base B).

[Rule base B]

※ Rule 1: IF A1 THEN B1 CF C1
※ Rule 2: IF (AND A2 A3) THEN B2 CF C2
※ Rule 3: IF (OR A4(AND A5 A6)) THEN B3 CF C3
※ Rule 4: IF (NOT A7) THEN B4 CF C4
※ Rule 5: IF A8 THEN B5 CF C5
※ Rule 6: IF A9 THEN B5 CF C6

### Procedure 1

In the above Rule Base B, since the rule 3 contains two operators of OR and AND, the associated proposition is divided into two propositions containing (A4) and (AND A5 A6).

### Procedure 2

Sets R1 = (AND A5 A6), where R1 is a new variable.

### Procedure 3

Adds a rule 4 in the Rule Base B-NEW.

### Procedure 4

Sets R2 = (NOT A7) in the rule 4 of the Rule Base B, where R2 is a new variable. Adds a rule 6 in the Rule Base B-NEW.

### Procedure 5

Since the rules 5 and 6 in the rule base B have the same action part, sets R3 = B5 and R4 = B5, where R3 and R4 are new variables. Adds rules 7 to 9 in the Rule Base B-NEW.

[Rule Base B-NEW]

ⵝ Rule 1: IF A1 THEN B1 CF C1
ⵝ Rule 2: IF (AND A2 A3) THEN B2 CF C2
ⵝ Rule 3: IF (OR A4 R1) THEN B3 CF C3
ⵝ Rule 4: IF (AND A5 A6) THEN R1 CF 1
ⵝ Rule 5: IF R2 THEN B4 CF C4
ⵝ Rule 6: IF A7 THEN R2 CF -1
ⵝ Rule 7: IF A8 THEN R3 CF C5
ⵝ Rule 8: IF A9 THEN R4 CF C6
ⵝ Rule 9: IF (OR R3 R4) THEN B5 CF 1

Next given below are a Rule Base C comprising only a single rule 1 and such a specific example of rule conversion as in the above and its rule conversion result (Rule Base C-NEW).

[Rule Base C]

ⵝ Rule 1: IF (OR (NOT (AND A1 A2)
     (OR A3 (AND A4 A5 (OR A6 A7 A8 ))))
     THEN B1 CF C1

Procedure 1

Resolves into (NOT (AND A1 A2)) and ((OR A3 (AND A4 A5 (OR A6 A7 A8))). Further resolves the above into (AND A1 A2) and (AND A4 A5 (OR A6 A7 A8)), and resolves the latter into (OR A6 A7 A8).

Procedure 2

Sets as follows.
R2 = ((OR A3 (AND A4 A5 (OR A6 A7 A8)))
R21 = (AND A4 A5 (OR A6 A7 A8))
R211 = (OR A6 A7 A8)

Procedure 4

Sets as follows.
R1 = (NOT (AND A1 A2))
R11 = (AND A1 A2)

[Rule Base C-NEW]

ⵝ Rule 1: IF (OR R1 R2) THEN B1 CF C1
ⵝ Rule 2: IF R11 THEN R1 CF -1
ⵝ Rule 3: IF (AND A1 A2) THEN R11 CF 1
ⵝ Rule 4: (OR A3 R21) THEN R2 CF 1
ⵝ Rule 5: (AND A4 A5 R211) THEN R21 CF 1
ⵝ Rule 6: (OR A6 A7 A8) THEN R211 CF 1

II. Rule Priority Decision Step

This step, which corresponds to the pre-processing of the proposition priority decision step to be next carried out, decides the priorities of the respective rules (steps 200 to 220 in Fig. 2(b)).

Here are reference rules for the priority decision.

(1) When the same proposition is present both in the condition part of a rule and in the action part of another rule, the priority of the rule having the same proposition in its action part is higher than that of the rule having the same proposition in its condition part.

(2) For rules having no common proposition, these rules have the same priority.

For example, a Rule Base D-NEW (given below) obtained through the rule conversion of the aforementioned step I has such rule priorities as given in Table 1 below.

6

[Rule Base D-NEW]

✗ Rule 1: IF A1 THEN B1 CF C1
✗ Rule 2: IF (AND A2 B1) THEN B2 CF C2
✗ Rule 3: IF B2 THEN B3 CF C3
✗ Rule 4: IF A3 THEN B4 CF C4

TABLE 1

| Priority | Rule number |
|----------|-------------|
| 1 | 1 |
| 2 | 2 |
| 3 | 3 |
| 3 | 4 |

That is, in the above rule base D-NEW, rules 1 and 2 have the same proposition B1 in their condition and action parts, but the priority of the rule 1 having the same proposition B1 in its action part is higher than that of the rule 2 having the same proposition B1 in its condition part. Further, with regard to the rules 2 and 3 having the same proposition B2 in their condition and action parts, the priority of the rule 2 having the same proposition B2 in its action part is higher than that of the rule 3 having the same proposition B2 in its condition part. With respect to the rules 3 and 4, since the same proposition is not present therein, these rules have the same priority. As a result, the priorities of the rules are as shown in the above Table 1.

III. Proposition Priority Decision Step

This step decides the priorities of the propositions based on the above-decided priorities of the rules. In the decision, the priority of the proposition An present in the condition part of each rule is set to be higher than that of the proposition Bn present in the action part thereof (step 230 in Fig. 2(b)).

In the above Rule Base D-NEW, the priorities of the propositions are divided into 4 hierarchies as shown in Table 2 below.

TABLE 2

| Priority | Proposition |
|----------|-------------|
| 1 | A1 |
| 2 | B1, A2 |
| 3 | B2, A3 |
| 4 | B3, B4 |

IV. Dummy Proposition Development Step

In this step, the respective rules of the database obtained through the rule conversion of the previous step I are sequentially examined so that, when the proposition present in the condition part of each rule is not derived from its higher rule, that is, when the same proposition as present in the condition part of the rule in question is not present in the action parts of the higher rules, the dummy of the proposition is developed in all the layers higher than that proposition (steps 240 to 250). In the above Rule Base D-NEW, since A2 and A3 of the propositions A1, A2, B1, B2 and A3 present in the condition parts of the rules are not derived from the higher layers, A2 dummy proposition and A3 dummy propositions 1 and 2 for the propositions A2 and A3 are developed in the higher layers. As a result, the priority list of the propositions is as shown in Table 3 below.

7

TABLE 3

| Priority | Proposition | Proposition Number |
|---|---|---|
| 1 | A1, A2 dummy, A3 dummy 2 | 3 |
| 2 | B1, A2, A3 dummy 1 | 3 |
| 3 | B2, A3 | 2 |
| 4 | B3, B4 | 2 |

Although the dummy proposition addition step will be clear from the following description, this step is to develop neurons present only in the intermediate layer (corresponding to the hierarchies of the above priorities 2 and 3) of the neural network in the input layer (corresponding to hierarchy of the above priority 1) of the neural network.

V. Proposition Characteristic List Decision Step

In this step, in order to enable automatic generation of a neural network corresponding to the above proposition priority list (Table 3) created in the neural network system 5, characteristic data (relationships with the propositions in the higher layers, certainty) indicative of linkage relationships with the propositions in their higher layers are attached to the respective propositions in the proposition priority list. As a result, such a characteristic list as shown in Table 4 is created (steps 260 and 270).

In this case, the format of the characteristic list for a proposition i is defined as:

(Proposition i Relationship i with higher layer proposition Certainty i).

Reference rules for generating the characteristic list are as follows.

(1) When the proposition i is present in the action part of a rule j in a group of rules, the relationship i with the higher layer proposition is set to be the condition part of the rule j and its certainty i is that of the rule j.

(2) If no operator is present in the above condition part or if only one proposition is present in the condition part, then the proposition is parenthesized together with OR by ().

(3) Even when a dummy proposition is present in the higher layer of the proposition i, the dummy proposition is parenthesized together with OR by ().

(4) When the proposition i has a dummy proposition in the higher layer, the certainty i is set to be 1.

(5) With respect to the proposition in the highest layer, its relationship i with the higher layer proposition and the certainty i are both expressed in terms of NIL (meaning nothing).

As a result, the proposition characteristic list for the above Rule Base D-NEW is shown in Table 4 below.

```
           TABLE  4

   First Layer (Highest Layer)

      (((A1 NIL NIL) (A2 DUMMY NIL NIL) (A3

                     DUMMY 2 NIL NIL))

   Second Layer

      ((B1 (OR A1) C1) (A2 (OR A2 DUMMY) 1) (A3
```

```
                                    DUMMY 1 (OR A3 DUMMY 2) 1))

        Third Layer (Lowest Layer)

           ((B3 (OR B2) C3) (B4 (OR A3) C4))
```

The conversion part 4 of Fig. 1 carries out the aforementioned steps I to V to generate such a characteristic list as shown in Table 4 and outputs the generated characteristic list to the neural network system 5 (step 280).

Explanation will next be made as to the operation of the neural network system 5.

The processing procedure of the neural network system 5 is divided roughly into two steps which follow.

I. Development to Neural Network
II. Learning of Neural Network

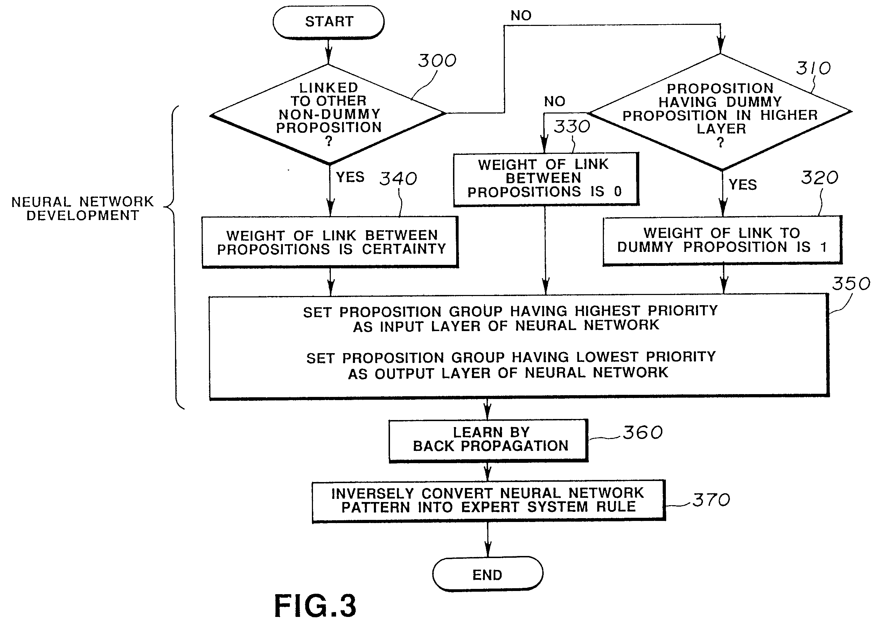

These will be sequentially detailed by referring to a flowchart of Fig. 3.

I. Development to Neural Network

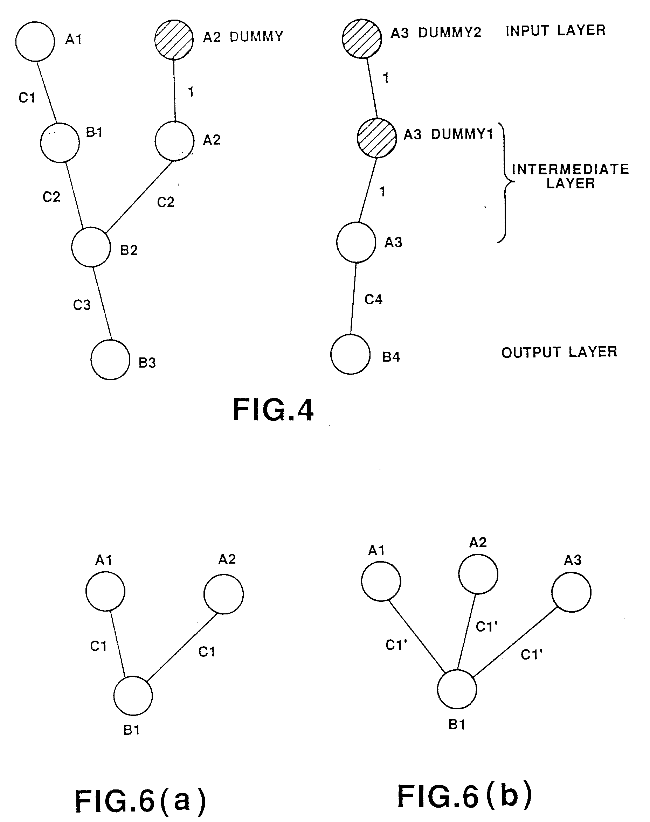

The neural network system 5, on the basis of the characteristic list received from the conversion part 4, automatically generates an initial pattern for the neural network corresponding to the above characteristic list. Fig. 4 shows an example of development of such a characteristic list as shown in Table 4 to the neural network.

In other words, the respective propositions in the received characteristic list are associated with respective neurons in the neural network and the certainty i in the characteristic list is used for the weight of each neuron at its input side.

More specifically, paying attention to the each proposition characteristic list ((proposition i relationship i with higher layer proposition certainty i)), when the proposition i is linked by means of OR or AND to a proposition other than the dummy proposition, its weight is set to be the certainty i in the associated proposition characteristic list. When the proposition i is linked by means of OR or AND to the dummy proposition, its weight is set to be the certainty i(=1) in the associated proposition characteristic list. When the proposition i is not linked to the other propositions, (NIL NIL) is set and its weight is set to be 0. Such processing is repetitively applied to all the propositions to generate a neural network pattern (steps 300 to 340 in Fig. 3).

In the above characteristic list, the proposition present in the highest layer (the first layer in Table 4) of the first priority is associated with the input layer of the neural network, the proposition present in the lowest layer (the fourth layer in Table 4) of the lowest priority is associated with the output layer of the neural network, and the layers (the second and third layers in Table 4) between the highest and lowest layers are associated with the intermediate layer of the neural network (step 350).

In this case, each of the neurons in the neural network system receives an input signal and generates an output signal based on the following threshold function (1). That is, means for handling ambiguity in the production rule include a min-max method, a certainty calculation method and a threshold function method. For easy learning, in the present embodiment, the threshold function method is employed. According to the threshold function (1), a signal can be propagated in association with a logical operator (AND, OR, NOT) present in a proposition in the rule base.

$$OUT_j = CFNET (NET_j, THO) = 2 \times (1/(1 + \exp (-NET_j/THO))-0.5) \qquad (1)$$

where,
    $OUT_j$:    The output value of a proposition j
    $NET_j$:    A sum of weighted input values
    THO:    Weight correction coefficient

When a relationship with the proposition of the higher layer is AND, $THO = \xi \times n$. When a relationship with the proposition of the higher layer is OR, $THO = \xi$ ($\xi$ being a predetermined correction coefficient and n is the number of propositions including AND) and the weight correction coefficient THO has a value of $CFNET (1, THO) = r$, where a relationship $0 < r < 1$ is satisfied and the value r is set to be desirably close to 1. When $r = 0.9$ for example, the weight correction efficient $THO = 0.38$. Further, CFNET indicates a threshold function name.

In the neural network shown in Fig. 4, only the neuron B2 has an AND linkage and the other neurons have all an OR linkage.

II. Learning of Neural Network

When it is desired to learn with use of the neural network having such an arrangement as mentioned above, a plurality of input patterns and desired output values (teaching data) for the respective states are provided to the neural network and the weights of the respective neurons in the neural network are modified so that an error between an actual output and the teaching data become minimum, that is, a so-called back propagation learning is carried out (step 360).

In the back propagation learning, either one of the following two learning methods is selected.

(i) Learning is carried out for link weights other than link weights 0 and 1. In other words, no learning is carried out for the link weights 0 and 1 and the weight correction coefficient THO in the above equation (1).

(ii) Learning is carried out for all link weights and the weight correction coefficient THO.

In the above method (ii), learning may in some cases, cause variation of the number of links to be input to a neuron and its weight.

When the neural network system 5 performs such operations as mentioned above and completes the learning by either one of the aforementioned methods, the system 5 inputs a neuron linkage relationship after completing the learning to the inverse conversion part 6 in Fig. 1.

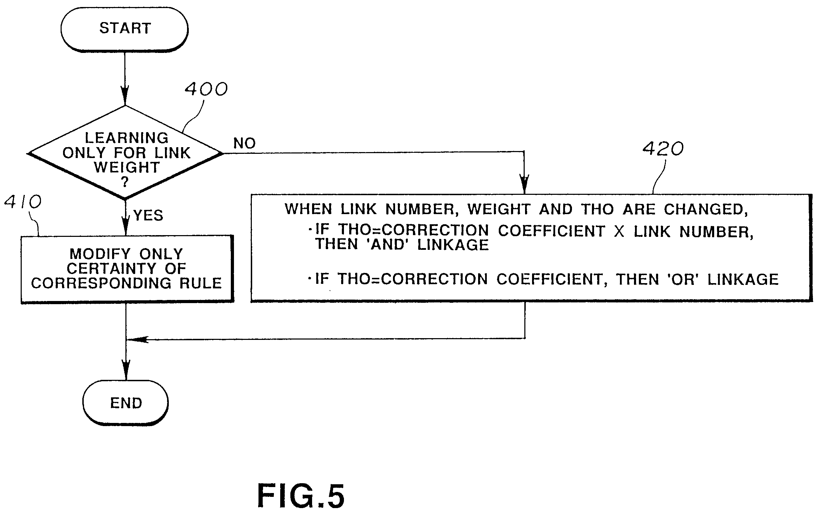

The inverse conversion part 6 performs its inverse converting operation over the operations of the rule conversion step I, rule priority decision step II, proposition priority decision step III, dummy proposition development step IV and proposition characteristic list decision step V carried out in the conversion part 4 to convert the neural network having neurons associated with propositions into an assembly of rules which can be used in the expert system 3, that is, into the format of the rule base (step 370 in Fig. 3). In this connection, the learning of the neural network system 5 is carried out based on the aforementioned learning method (1) for learning of link weights other than link weights 0 and 1, since the link structure itself of the neuron is not varied, the inverse converting operation of the inverse conversion part 6 is mainly to modify the certainty of the associated rule (steps 400 and 410 in Fig. 5).

However, when the learning of the neural network system 5 is carried out based on the aforementioned (ii) for learning of all the link weights and weight correction coefficient THO, learning may, in some cases, cause variation of the number of links to be input to a neuron and its weight. To avoid this, when a characteristic list is created from the neural network, the linkage relationship between the propositions is determined with use of the aforementioned weight correction coefficient THO in the following manner (step 420 in Fig. 5).

When THO = $\xi$ x the number of links, the linkage relationship is determined to be an AND linkage. When THO = $\xi$, the linkage relationship is determined to be an OR linkage.

Fig. 6(a) corresponds to the network development of the following rule.

IF (AND A1 A2) THEN B1 CF C1

Assume now that, after the learning of the network of Fig. 6, such a link to the proposition A3 as shown in Fig. 6(b) takes place and the link weight is changed to C1'. Then, if a relationship THO = $\xi$ x the number of links is satisfied, the rule after subjected to the inverse conversion becomes as follows.

IF (AND A1 A2 A3) THEN B1 CF C1'

When the relationship THO = $\xi$ is satisfied, the rule after subjected to the inverse conversion becomes as follows.

IF (OR A1 A2 A3) THEN B1 CF C1'

Through such inverse converting operation as mentioned above, the inverse conversion part 6 converts the neural network learned by the neural network system 5 into the format of the rule base.

In this way, the rule base, whose adjustment is completed, is input to the rule base 1 of the expert system 3 through operator's operation to update the rule base 1.

INDUSTRIAL APPLICABILITY:

The present invention is suitably used to revise rule bases of various sorts of expert systems.

**Claims**

1. A method for automatically adjusting a rule base of an expert system using a neural network, comprising:

a first step of hierarchically resolving the rule base of the expert system which comprises a set of production rules each including a condition part, an action part and a certainty into units of propositions each including no or one logical operator to automatically generate a characteristic list including a relationship with a proposition in a higher layer and the certainty with respect to each of the resolved propositions;

a second step of automatically generating an initial pattern of the neural network having neurons whose linkage relationships are associated with linkage relationships of the propositions on the basis of the generated characteristic list; and

a third step of performing learning operation of the generated neural network.

2. A method as set forth in claim 1, wherein said first step includes:

a first stage of converting the rule base of the expert system which comprises the set of proposition rules including the condition part, action part and the certainty into a new rule base which comprises a set of production rules each including no or one logical operator;

a second stage of determining priorities of the respective production rules in the converted new rule base;

a third stage of determining priorities of the respective propositions present in the new rule base on the basis of the priorities of the generated production rules;

a fourth stage of developing a dummy proposition of one of the propositions not derived from higher production rules in each hierarchical layer having the priorities higher than the proposition not derived from the higher production rules; and

a fifth stage of generating the characteristic list including the relationship with the propositions in the higher layer and the certainty with respect to each of the hierarchy-developed propositions including the dummy proposition.

3. A method as set forth in claim 2, wherein said first stage includes:

a first procedure of extracting ones of a plurality of production rules in the rule base including a plurality of operators and resolving the condition and action parts of the extracted production rules into propositions each including at most one operator;

a second procedure of replacing ones of the resolved propositions including the operator by a new variable and newly adding a predetermined new production rule showing a linkage relationship between the propositions including the operator and the associated new variable;

a third procedure of extracting ones of the production rules including a NOT operator in the propositions, replacing the action part of the extracted production rules by a new variable and newly adding a predetermined new production rule showing a linkage relationship between the propositions including the NOT operator and the associated new variable; and

a fourth procedure of extracting a plurality of the production rules having the same action part, replacing the action parts of the extracted production rules by a new variable and newly adding a predetermined new production rule showing a linkage relationship between the same action part and the associated new variable;

said first to fourth procedures being repetitively executed.

4. A method as set forth in claim 2, wherein, in said second stage, with respect to priorities of the production rules having the same proposition in the condition and action parts, the priority of the production rule having the same proposition in the action part is set to be higher than the priority of the production rule having the same proposition in the condition part.

5. A method as set forth in claim 2, wherein, in said third stage, the priority of the proposition present in the condition part in each of the production rules is set to be higher than the priority of the proposition present in the action part of the production rule.

6. A method as set forth in claim 2, wherein, in said fifth stage, a format of the characteristic list for each of the propositions is defined as:

(proposition relationship with higher layer certainty).

7. A method as set forth in claim 2, wherein, in said second step, ones of the propositions having the first priority in the characteristic list generated in the fifth stage are associated with an input layer of the neural network, ones of the propositions having the lowest priority are associated with an output layer of the neural network, ones of the propositions having priorities between the first and lowest priorities are associated with an intermediate layer of the neural network, and the knowledge certainties in the characteristic list are used as weights of the neurons in the neural network.

8. A method as set forth in claim 2, wherein, in said second step, an output signal corresponding to an input signal is generated on the basis of a threshold function which as follows;

$$OUTj = CFNET (NETj, THO) = 2 \times (1/(1 + \exp (-NETj/THO))-0.5)$$

where,

OUTj is an output value of a proposition j, NETj is a sum of weighted input values, THO is a weight correction coefficient which is $\xi \times n$ ($\xi$ being a predetermined correction coefficient and n being the number of AND propositions) when the relationship with the higher layer proposition is AND and which is $\xi$ when the relationship with the higher layer proposition is OR, and CFNET is a threshold function name.

9. A method as set forth in claim 1, wherein, in said third step, a plurality of input patterns and teaching data associated with the input patterns are provided to the neural network and each weight in the neural network is modified so between an actual output and the told data is minimized.

10. A method as set forth in claim 1, further comprising a fourth step of inversely converting the neural network after the learning is completed into a format of the rule base.

11. A system for automatically adjusting a rule base of an expert system using a neural network, comprising:

first means for converting the rule base of the expert system which comprises a set of production rules each including a condition part, an action part and a certainty into a new rule base which comprises a set of production rules each including no or one logical operator;

second means for determining priorities of the respective production rules in the converted new rule base;

third means for determining priorities of the respective propositions present in the new rule base on the basis of the priorities of the generated production rules;

fourth means for developing a dummy proposition of one of the propositions not derived from higher production rules in each of hierarchical layer having the priorities higher than the proposition not derived from the higher production rules;

fifth means for generating the characteristic list including a relationship with the propositions in the higher layer and the certainty with respect to each of the hierarchy-developed propositions including the dummy proposition;

sixth means for generating an initial pattern of the neural network having neurons whose linkage relationships are associated with linkage relationships between the propositions on the basis of the generated characteristic list; and

seventh means for performing learning operation of the generated neural network.

12. A system as set forth in claim 11, further comprising eighth means for inversely converting the neural network after the learning is completed into a format of the rule base.

FIG.1

START

*100*

NUMBER OF
OPERATORS INCLUDED
IN ONE PROPOSITION
(CONDITION PART An OR
ACTION PART Bn
IN RULE)≧2

YES

*110*

RESOLVE PROPOSITION
TO REDUCE OPERATORS

NO

*130*

SET PROPOSITION
INCLUDING 'NOT' AS
NEW VARIABLE

*120*

SET RESOLVED
PROPOSITION AS
NEW VARIABLES

*140*

NEWLY ADD FOLLOWING RULE:

· WHEN HEADER OPERATOR IS 'AND' OR 'OR'
  IF PROPOSITION AFTER RESOLUTION THEN
  NEW VARIABLE CF1

· WHEN HEADER OPERATOR IS 'NOT'
  IF PROPOSITION AFTER RESOLUTION WITHOUT
  'NOT' THEN NEW VARIABLE CF-1

*150*

NUMBER OF
OPERATORS INCLUDED
IN ONE PROPOSITION
≧2

YES

NO *160*

PLURAL
RULES HAVE SAME
ACTION PART
?

YES

*170*

REPLACE ACTION
PART IN EACH RULE WITH
DIFFERENT VARIABLE,
RESPECTIVELY

NO

*190*

NEWLY ADD RULE:
IF OR NEW VARIABLE GROUP THEN COMMON
ACTION PART CERTAINTY 1

NO

ALL RULES
DECOMPOSED
?

*180*

YES

A

# FIG.2 (a)

A

*200*

SAME
PROPOSITION
PRESENT IN An AND Bn
OF DIFFERENT
RULES
?

YES

NO

*210*

PRIORITY DIFFERENCE NOT
PRESENT BETWEEN RULES

*220*

SET HIGHER PRIORITY OF
RULE HAVING COMMON
PROPOSITION IN Bn

*230*

SET HIGHER PRIORITY OF
PROPOSITION IN An IN EACH
RULE WITH PRIORITY

*240*

NOT
DERIVED FROM
PROPOSITION HAVING
HIGHER PRIORITY
?

YES

NO

*250*

RAISE PRIORITY OF
DUMMY PROPOSITION

*260*

ATTACH 'OR' TO An WITHOUT
OPERATOR AND TO DUMMY
PROPOSITION

*270*

SET CERTAINTY OF Bn OF
PROPOSITIONS WITH PRIORITIES
AS CERTAINTY OF RULE

*280*

OUTPUT
CHARACTERISTIC
LIST

END

# FIG.2 (b)

15

START

LINKED
TO OTHER
NON-DUMMY
PROPOSITION
? 300

NO

PROPOSITION
HAVING DUMMY
PROPOSITION IN HIGHER
LAYER
? 310

NO

330

WEIGHT OF LINK
BETWEEN
PROPOSITIONS IS 0

YES 340

WEIGHT OF LINK BETWEEN
PROPOSITIONS IS CERTAINTY

YES 320

WEIGHT OF LINK TO
DUMMY PROPOSITION IS 1

NEURAL NETWORK
DEVELOPMENT

SET PROPOSITION GROUP HAVING HIGHEST PRIORITY
AS INPUT LAYER OF NEURAL NETWORK

SET PROPOSITION GROUP HAVING LOWEST PRIORITY
AS OUTPUT LAYER OF NEURAL NETWORK

350

LEARN BY
BACK PROPAGATION 360

INVERSELY CONVERT NEURAL NETWORK
PATTERN INTO EXPERT SYSTEM RULE 370

END

FIG.3

FIG.4

FIG.6(a)

FIG.6(b)

EP 0 536 396 A1

```
                    ┌─────────────┐
                    │    START    │
                    └──────┬──────┘
                           │
                           ▼            400
                        ╱  LEARNING ╲
                      ╱  ONLY FOR LINK ╲   NO ──────────────────────────────┐
                      ╲    WEIGHT    ╱                                       │
                        ╲    ?    ╱                          420             │
                           │                                                ▼
        410              YES              ┌──────────────────────────────────────────────────────┐
          │               │              │ WHEN LINK NUMBER, WEIGHT AND THO ARE CHANGED,          │
          ▼               ▼              │  ·IF THO=CORRECTION COEFFICIENT X LINK NUMBER,         │
   ┌──────────────────────┐             │   THEN 'AND' LINKAGE                                   │
   │    MODIFY ONLY        │             │                                                        │
   │   CERTAINTY OF        │             │  ·IF THO=CORRECTION COEFFICIENT, THEN 'OR' LINKAGE     │
   │ CORRESPONDING RULE    │             └──────────────────────────────────────────────────────┘
   └──────────┬───────────┘                            │
              │◄─────────────────────────────────────────
              ▼
        ┌──────────┐
        │   END    │
        └──────────┘
```

# FIG.5

# INTERNATIONAL SEARCH REPORT

International Application No PCT/JP91/00576

## I. CLASSIFICATION OF SUBJECT MATTER (if several classification symbols apply, indicate all) ⁴

According to International Patent Classification (IPC) or to both National Classification and IPC

Int. Cl⁵ G06F9/44, G06F15/18

## II. FIELDS SEARCHED

### Minimum Documentation Searched ⁷

| Classification System | Classification Symbols |
|---|---|
| IPC | G06F9/44, G06F15/18 |

### Documentation Searched other than Minimum Documentation to the Extent that such Documents are included in the Fields Searched ⁸

| | |
|---|---|
| Jitsuyo Shinan Koho | 1971 – 1990 |
| Kokai Jitsuyo Shinan Koho | 1971 – 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 1-288926 (Shimadzu Corp.), November 21, 1989 (21. 11. 89), (Family: none) | 1-12 |
| Y | "the 39th (latter period of 1988) National Convention's Lecture Treatises (I)" (Accepted on Nov. 9, 1988 by Industrial Property Library), Information Processing Society of Japan | 1-12 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 17, 1991 (17. 07. 91) | August 5, 1991 (05. 08. 91) |

| International Searching Authority | Signature of Authorized Officer |
|---|---|
| Japanese Patent Office | |

Form PCT/ISA/210 (second sheet) (January 1985)